# EUROPÄISCHE PATENTSCHRIFT

(11) **EP 2 851 580 B1**
(45) Veröffentlichungstag und Bekanntmachung des Hinweises auf die Patenterteilung: **06.11.2019**
(21) Anmeldenummer: 14003233.5
(22) Anmeldetag: 18.09.2014
(51) Int. Cl.: F16H 21/44, F42B 10/14, F16H 35/14

(54) **Verriegelungs- und Entriegelungssystem mit reversibler Auslösbarkeit**
Locking and unlocking system with reversible triggering
Système de verrouillage et déverrouillage à déclenchement réversible

(30) Priorität: 21.09.2013 DE 102013015746
(43) Veröffentlichungstag der Anmeldung: 25.03.2015
(73) Patentinhaber: MBDA Deutschland GmbH, 86529 Schrobenhausen (DE)
(72) Erfinder: Klaffert, Thomas, 85356 Freising (DE); Hetzer, Walter, 83043 Bad Aibling (DE)
(74) Vertreter: Isarpatent

(56) Entgegenhaltungen:
- US-A- 2 024 227
- US-A- 2 218 105
- US-A- 3 635 107
- US-B1- 6 250 584

## Beschreibung

### TECHNISCHES GEBIET

Die vorliegende Erfindung betrifft ein Verriegelungs- und Entriegelungssystem mit reversibler Auslösbarkeit. Derartige Verriegelungs- und Entriegelungssysteme werden vorwiegend in der Luftfahrttechnik eingesetzt, beispielsweise um bei von einem Trägerflugzeug transportierten Flugkörpern schwenkbare Tragflächen oder schwenkbare Ruder während des Tragflugs zu arretieren und zu verriegeln und für den autonomen Flug des Flugkörpers zu entriegeln.

### HINTERGRUND DER ERFINDUNG

In derartigen Anwendungsfällen ist es nicht nur bedeutend, dass die Verriegelung und die Entriegelung mit einer äußerst hohen Zuverlässigkeit funktionieren, sondern es ist außerdem von höchster Bedeutung, dass die einzelnen Verriegelungs- und Entriegelungsanordnungen mit einer hochpräzisen Synchronität betätigbar sind. Diese Synchronität ist erforderlich, um zu verhindern, dass beispielsweise eine Steuerfläche des Flugkörpers bereits ausgelenkt und die weiteren Steuerflächen mit einer zeitlichen Verzögerung dazu ausgelenkt werden. Dies würde dazu führen, dass der Flugkörper unkontrollierte Flugbewegungen durchführt, die zu einem Verlust des Flugkörpers oder - beim Abgang des Flugkörpers von einem Trägerflugzeug - zu einer Beschädigung des Trägerflugzeugs führen könnten.

### STAND DER TECHNIK

Übertotpunkt-Verriegelungen sind in der Mechanik allgemein bekannt, beispielsweise aus der DE G 84 28 699 U1 oder der DE G 86 15 004 U1.

Aus der DE 102 02 780 A1 ist es auch bereits bekannt, zwei Verriegelungs- und Entriegelungsanordnungen mittels eines Verriegelungs- und Entriegelungselements gemeinsamt zu betätigen, wobei dort eine Übertragungskinematik vorgesehen ist, die in einer Ruhestelle eine Totpunktlage einnimmt.

Die EP 2 617 647 A2 beschreibt ein Ver- und Entriegelungssystem mit einem Ver- und Entriegelungselement, das mittels einer Übertragungskinematik durch einen Antrieb zwischen einer Verriegelungsposition und einer Entriegelungsposition bewegbar ist. Die Übertragungskinematik weist zumindest ein Kinematikglied auf und ist so ausgebildet, dass sie eine Totpunktlage einnehmen kann und über diese Totpunktlage hinaus bewegt werden kann.

Gattungsgemäße Verriegelungs- und Entriegelungssysteme sind in der Praxis häufig Bestandteile von Stellsystemen. Stellsysteme (Aktoren) haben ein sehr breites Anwendungsspektrum (z. B. Industrie- und Anlagenbereich, Luft- und Raumfahrt, Schiffsbau, Kfz-Bereich, Verteidigungstechnik). Stellsysteme haben im Einsatz zumeist zwei unterschiedliche, wiederholbar zu kommandierende Haupt-Betriebsarten: "Aktiviert" (geregelte Nachführung des Ausganges unter Last) und "Deaktiviert".

Im Zustand "Aktiviert" sind die Regelgrößen am Ausgang von Stellsystemen im allgemeinen mechanische Größen (zum Beispiel Weg, Winkel, Kraft, Drehmoment). Die dem Antrieb des Stellsystems (Leistungswandler) zugeführte Hilfsenergie, die beispielsweise elektrisch, hydraulisch oder pneumatisch sein kann, wird in mechanisches Arbeitsvermögen gewandelt. Moderne Stellsysteme sind als Bindeglied zwischen übergeordneten Rechnern und den zu regelnden technischphysikalischen Prozessen eine leistungsfähige Synthese aus Mechanik, Elektronik und Informatik. Sie werden auch als mechatronische Systeme bezeichnet.

Im Gegensatz zu unterstützenden Stellsystemen im Automobilbereich, wo gegebenenfalls durch Freiläufe eine Notfunktion durch manuelle Betätigung (beispielsweise zu Abschleppzwecken) gewährleistet sein muss, wird von mechatronischen Stellsystemen im Zustand "Deaktiviert" ein definierter Zustand gefordert, in dem zumeist eine starre und spielfreie "Blockierung" auch unter dem Einfluss aller äußeren statischen und dynamischen Betriebslasten ermöglicht wird. Dies wird herkömmlicherweise zum Beispiel durch die Installation zusätzlicher Sicherheitsbremsen, Feststellbremsen, Sperrklinken oder Rückschlagventile erreicht, sofern der Antriebsstrang keine selbsthemmenden Eigenschaften aufweist. Spezielle Einsatzfälle erfordern gleichzeitig die genaue und eindeutige Einhaltung bestimmter Stellungen des Antriebsstrangs, also eine an- und abtriebsseitige Positionierung, die auch im Falle unbeabsichtigter oder fehlerhafter Ansteuerung des Antriebs strikt eingehalten werden muss. Diese Art einer "Verriegelung" ist häufig Teil eines Sicherheitskonzeptes in besonders kritischen Betriebsphasen und erfordert höchste Zuverlässigkeit.

Bei derzeitigen Anwendungen wird dieser "verriegelte" Zustand über einen definierten Zeitraum über die kritischen Betriebsphasen hinweg aufrecht erhalten und ist anschließend auf Kommando aufzuheben und in den Zustand "Entriegelt" zu überführen, um beispielsweise die Betriebsart "Aktiv" zu ermöglichen.

Der Übergang "Verriegelt" in "Entriegelt" und umgekehrt erfolgt zumeist unter erschwerten Bedingungen, bei denen Folgendes auftritt:
- hohe äußere Lasten am Stellsystemausgang,
- limitierte Hilfsleistung zur Ausführung der Transfervorgänge,
- sehr kurze Schaltzeiten, speziell beim Entriegeln,
- höchste Funktionszuverlässigkeit unter extremen Umweltbedingungen, insbesondere beim Entriegeln,
- passive Beibehaltung der Zustände Ver-/ Entriegelt (ohne Energiezufuhr),
- Synchronisationsmöglichkeit (zeitlich und örtlich) mit weiteren Antriebssträngen des Stellsystems.

Die gleichzeitige Berücksichtigung aller einzelnen Bedingungen führt überwiegend zu widersprüchlichen Lösungsansätzen. Um einige dieser Bedingungen einzuhalten, sind mit einem konservativen Aufbau außerdem technisch aufwändige und teure Lösungsausführungen notwendig, die dadurch im Widerspruch zur Forderung nach höchstmöglicher Funktionszuverlässigkeit stehen.

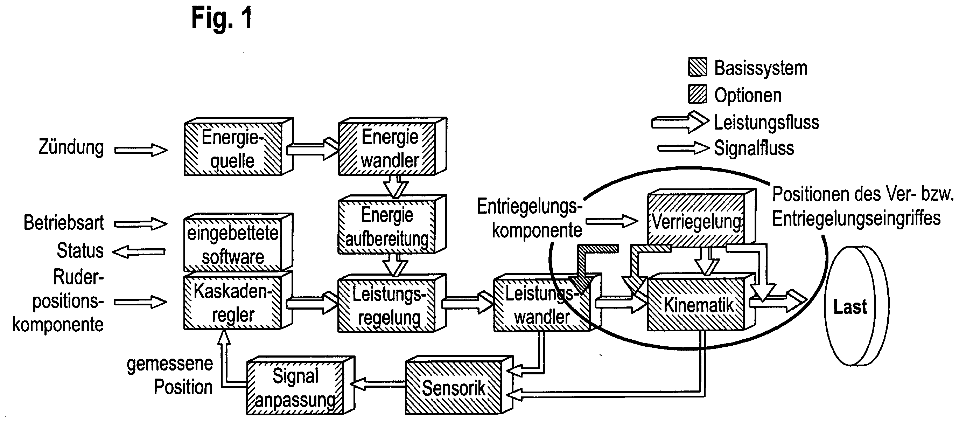

Diesbezüglich kann sich eine Verlagerung der Verriegelungsstelle oder der Entriegelungsstelle vom mechanischen Ausgang des Stellsystems beispielsweise an den Eingang eines häufig vorhandenen Getriebes erleichternd auswirken. In diesem Falle werden zwar die an der Blockierstelle beim Ver-/Entriegelungsvorgang zu überwinden Lasten reduziert, aber gleichzeitig erhöhen sich unerwünschte Abweichungen abtriebsseitig aufgrund mechanischer Lose der Nachgiebigkeiten aller Getriebeglieder zwischen Entriegelungsstelle und dem Ausgang des Stellsystems. Darüber hinaus können hierbei alle der Verriegelungsstelle nachgeschalteten Getriebeglieder undefinierten äußeren Lasten ausgesetzt sein, was wiederum zu noch höheren Forderungen hinsichtlich der Auslegung der Getriebeglieder führen kann. Die Fig. 1 zeigt die hier angesprochenen Zusammenhänge in Verbindung mit dem Aufbau eines Stellsystems schematisch anhand eines Blockschaltbilds.

Prinzipiell bestehen bekannte, wiederholbar betätigbare Ver-/Entriegelungs-Systeme fast ausnahmslos aus:
- einer zumeist elektrischen Ansteuereinheit;
- Betätigungsorganen, in denen die nach Kommando zur Ver- beziehungsweise Entriegelung bereitgestellte Hilfsenergie (zum Beispiel hydraulisch, pneumatisch oder elektrisch) in mechanische Arbeit umgesetzt wird;
- den eigentlichen mechanischen Riegelelementen;
- den "mechanischen Verbindungen" zwischen den Betätigungsorganen und den Riegelelementen;
- Sensorelementen zur Anzeige des Zustandes (zum Beispiel "Verriegelt")

Die Volllast-Arbeitskennlinien von Standard-Betätigungselementen weichen meist erheblich von den an den Riegelelementen vorgefundnen Lastverläufen ab. Typisch sind initial sehr hohe Ausklinklasten und nachfolgend notwendige sehr hohe Beschleunigungswerte, um in der Betriebsart "Aktiv" unerwünschte Kollisionen an den Riegelelementen zu vermeiden. Bekannte Lösungen kombinieren überdimensionierte Betätigungselemente mit einer Regelung des Ent-/ Verriegelungsvorganges.

Ziele der Erfindung sind:
- Realisierung mit Standardkomponenten
- Vermeidung überdimensionierter Betätigungselemente (Kosten / Bauraum)
- ungeregelter Ver-/ Entriegelungsvorgang (Kosten / Funktion)
- Minimierung der Komponentenanzahl (Zuverlässigkeit / Kosten)
- leichte Anpassung an geänderte Anforderungen
- wechselseitige Abstimmbarkeit Betätigungsorgane mit den Riegelelementen
- Eignung für unterschiedliche Technologien (elektrisch, pneumatisch, etc.)

### DARSTELLUNG DER ERFINDUNG

Die Aufgabe der Erfindung besteht darin, ein gattungsgemäßes Ver- und Entriegelungssystem zu schaffen, dessen Eigenschaften die gestellten Anforderungen unter den vorgefundenen Bedingungen ohne Regelung und ohne überdimensioniertes Betätigungselement unter einfachstem Aufbau kompromissfrei und vollständig erfüllen.

Diese Aufgabe wird erfindungsgemäß durch ein Verriegelungs- und Entriegelungssystem mit den Merkmalen des Anspruchs 1 gelöst.

Das erfindungsgemäße Verriegelungs- und Entriegelungssystem mit reversibler Auslösbarkeit ist versehen mit einem ortsfesten Antrieb und einer Mehrzahl von Verriegelungs- und Entriegelungsanordnungen, die jeweils versehen sind mit zumindest einem Verriegelungs- und Entriegelungselement, das zwischen einer Verriegelungsposition und einer Entriegelungsposition bewegbar ist, und einer Übertragungskinematik zur kinematischen Kopplung des Verriegelungs- und Entriegelungselement an den Antrieb mit einem ersten Kinematikglied, einem zweiten Kinematikglied und einem dritten Kinematikglied, wobei das erste Kinematikglied an den Antrieb gekoppelt und mit einem von dem Antrieb abgewandten freien Ende mittels eines ersten Gelenks mit einem ersten Ende des zweiten Kinematikglieds schwenkbar verbunden ist, wobei ein zweites Ende des zweiten Kinematikglieds mittels eines zweiten Gelenks schwenkbar mit dem dritten Kinematikglied verbunden ist, und wobei das dritte Kinematikglied (19) mittels eines dritten Gelenks an einem ortsfesten Punkt gelenkig gelagert und das Verriegelungs- und Entriegelungselement starr mit dem dritten Kinematikglied (19) verbunden ist. Das erste Kinematikglied ist mittels des Antriebs zwischen einer ersten Position und einer zweiten Position verschwenkbar, wobei das erste Kinematikglied in der zweiten Position über eine Strecklacke, in welcher das erste und das zweite Kinematikglied eine Gerade bilden, hinaus in eine Übertotpunktlage verschwenkt ist. Weiterhin ist zumindest eines der Kinematikglieder in einer kinematisch wirksamen Richtung derart veränderbar, dass sich die Übertragungskinematik über die Strecklage hinaus in die Übertotpunktlage bewegen kann.

### VORTEILE

Durch diese, eine Übertotpunktlage der Übertragungskinematik ermöglichende Ausgestaltung von zumindest einem der Kinematikglieder wird auf besonders wirksame Weise erreicht, dass das gesamte Verriegelungs- und Entriegelungssystem in der Übertotpunktlagenstellung sicher und definiert arretiert ist. Das reversible Überwinden der Totpunktlage führt wieder zu einer synchronen Bewegung des Verriegelungs- und Entriegelungssystems in die andere Position, beispielsweise aus einer verriegelten Position in eine entriegelte Position oder umgekehrt. Die Veränderbarkeit des zumindest einen Kinematikglieds, die die Bewegbarkeit der Übertragungskinematik über die Totpunktlage hinaus in die Übertotpunktlage ermöglicht, kann beispielsweise durch eine elastische Verformbarkeit des zumindest einen Kinematikgliedes gebildet sein.

Vorzugsweise sind die Verriegelungs- und Entriegelungsanordnungen der Mehrzahl von Verriegelungs- und Entriegelungsanordnungen über zumindest ein Verbindungsglied miteinander gekoppelt und auf diese Weise bei einer Bewegung des jeweiligen Verriegelungs- und Entriegelungselements aus der Verriegelungsposition in die Entriegelungsposition oder aus der Entriegelungsposition in die Verriegelungsposition zwangläufig miteinander synchronisiert. Diese zwangläufige Synchronisation führt auf besonders vorteilhafte Weise dazu, dass alle Verriegelungs- und Entriegelungselemente des gesamten Verriegelungs- und Entriegelungssystems zeitgleich ihren Zustand in Bezug auf eine Verriegelung beziehungsweise Entriegelung ändern.

Vorteilhaft ist vorgesehen, dass ein Verriegelungs- und Entriegelungselement in der zweiten Position des ersten Kinematikglieds in der Verriegelungsposition und in der ersten Position des ersten Kinematikglieds in der Entriegelungsposition angeordnet ist. Optional ist weiterhin vorgesehen, dass die Übertragungskinematik so ausgebildet ist, dass sie auch in der ersten Position des ersten Kinematikglieds eine Übertotpunktlage einnimmt. Auf diese Weise ist gesichert, dass sich die Verriegelung nicht ungewollt lösen kann. Vorzugsweise nimmt die Übertragungskinematik zudem eine zweite Übertotpunktlage in der Entriegelungsposition ein. Dadurch wird erreicht, dass auch der entriegelte Zustand des Verriegelungs- und Entriegelungssystems nicht ungewollt aufgehoben werden kann.

Besonders vorteilhaft ist es, wenn die Veränderbarkeit von zumindest einem der Kinematikglieder in einer kinematisch wirksamen Richtung dadurch erzielt wird, dass das Kinematikglied in einer kinematisch wirksamen Abmessung definiert veränderbar ist. Diese definierte Veränderbarkeit kann beispielsweise eine elastische Kompressibilität oder eine elastische Biegbarkeit sein.

Dabei ist es von Vorteil, wenn die definierte Veränderbarkeit der wirksamen kinematischen Abmessung durch eine vorgegebene Längssteifigkeit des Kinematikglieds bewirkt wird. Diese Variante, bei der das Kinematikglied beispielsweise durch Biegung seine kinematisch wirksame Abmessung verändern kann, sorgt in der Übertotpunktlage durch die definierte Längssteifigkeit des Kinematikglieds für eine besonders sichere Arretierung.

Es ist weiterhin von Vorteil, wenn zumindest ein Anschlag für das veränderbare Kinematikglied vorgesehen ist, der eine von der definierten Veränderbarkeit der kinematisch wirksamen Abmessung zugelassene Bewegung des veränderbaren Kinematikglieds begrenzt. Durch einen solchen Anschlag wird beispielsweise eine zu starke Verbiegung eines längssteifen Kinematikglieds verhindert.

In einer besonders vorteilhaften Ausführung des erfindungsgemäßen Verriegelungs- und Entriegelungssystems ist das Verbindungsglied ein drehbares oder schwenkbares Element ausgebildet. Derartige Elemente eignen sich besonders gut für eine schnelle, beispielsweise auch motorgetriebene, Betätigung.

Vorzugsweise ist das Verbindungsglied selbstzentrierend gelagert, wodurch die Präzision in Bezug auf die Synchronität der Betätigung aller Verriegelungs- und Entriegelungselemente wesentlich erhöht wird.

Von Vorteil ist, wenn die ersten Kinematikglieder der Übertragungskinematik der einzelnen miteinander gekoppelten Verriegelungs- und Entriegelungsanordnungen am Verbindungsglied angebracht sind, wobei es besonders vorteilhaft ist, wenn diese Anbringung symmetrisch ist.

Weiter vorteilhaft ist es, wenn die einzelnen miteinander gekoppelten Verriegelungs- und Entriegelungsanordnungen selbstsynchronisierend ausgebildet sind. Auch diese Selbstsynchronisation trägt zu einer hohen Präzision der Synchronität der Verriegelungs- und Entriegelungs-Bewegung der einzelnen Verriegelungs- und Entriegelungselemente bei.

Vorteilhaft ist auch, wenn das jeweilige Verriegelungs- und Entriegelungselement als eine Zapfenverbindung mit einem konischen Zapfen und einer angepasst konischen Zapfenaufnahme ausgebildet ist. Durch diese Konizität werden Toleranzen im gesamten Verriegelungs- und Entriegelungsmechanischmus kompensiert und eine zuverlässige Verriegelung beziehungsweise Entriegelung aller Verriegelungs- und Entriegelungselemente wird so gewährleistet.

Der Vorteil des erfindungsgemäßen Ver- und Entriegelungssystems besteht darin, dass eine Realisierung als sogenannte "of-the-shelf"-Lösung mit verfügbaren Standardkomponenten möglich ist. Das Vorsehen überdimensionierter Betätigungselemente kann vermieden werden, wodurch keine unnötig hohe Kostensteigerung auftritt. Der Ver- und Entriegelungsvorgang kann ungeregelt erfolgen, was ebenfalls einen Kostenvorteil mit sich bringt und zudem die Funktionssicherheit erhöht. Die Anzahl der für die Realisierung des erfindungsgemäßen Ver- und Entriegelungssystems erforderlichen Komponenten ist gegenüber dem Stand der Technik reduziert, wodurch die Zuverlässigkeit steigt und die Kosten sinken. Vorteilhaft bei dem erfindungsgemäßen Ver- und Entriegelungssystem ist außerdem, dass es leicht an geänderte Anforderungen anpassbar ist. Die Betätigungsorgane und die Riegelelemente können auf einfache Weise wechselseitig aufeinander abgestimmt werden. Zudem ist das erfindungsgemäße Ver- und Entriegelungssystem für unterschiedliche Technologien, beispielsweise für eine elektrische, pneumatische oder hydraulische Betätigung geeignet.

Bevorzugte Ausführungsbeispiele der Erfindung mit zusätzlichen Ausgestaltungsdetails und weiteren Vorteilen sind nachfolgend unter Bezugnahme auf die beigefügten Zeichnungen näher beschrieben und erläutert.

### KURZE BESCHREIBUNG DER ZEICHNUNGEN

Es zeigt:
- Fig. 1: ein typisches Blockschaltbild eines Stellsystems und mögliche Positionen zum Vorsehen einer Ver-/Entriegelungsstelle;
- Fig. 2: eine schematische Darstellung der Funktion des erfindungsgemäßen Ver- und Entriegelungssystems;
- Fig. 3: ein schematisches Diagramm einer Ver- und Entriegelungskinematik in einem erfindungsgemäßen Verriegelungs- und Entriegelungssystem und
- Fig. 4: eine Darstellung einer Anwendung des erfindungsgemäßen Ver- und Entriegelungssystems in einem Flugkörperstellsystem.

### DARSTELLUNG VON BEVORZUGTEN AUSFÜHRUNGSBEISPIELEN

In Fig. 1 ist ein typisches Blockschaltbild eines Stellsystems mit möglichen Positionen zum Vorsehen einer Ver-/Entriegelungsstelle dargestellt.

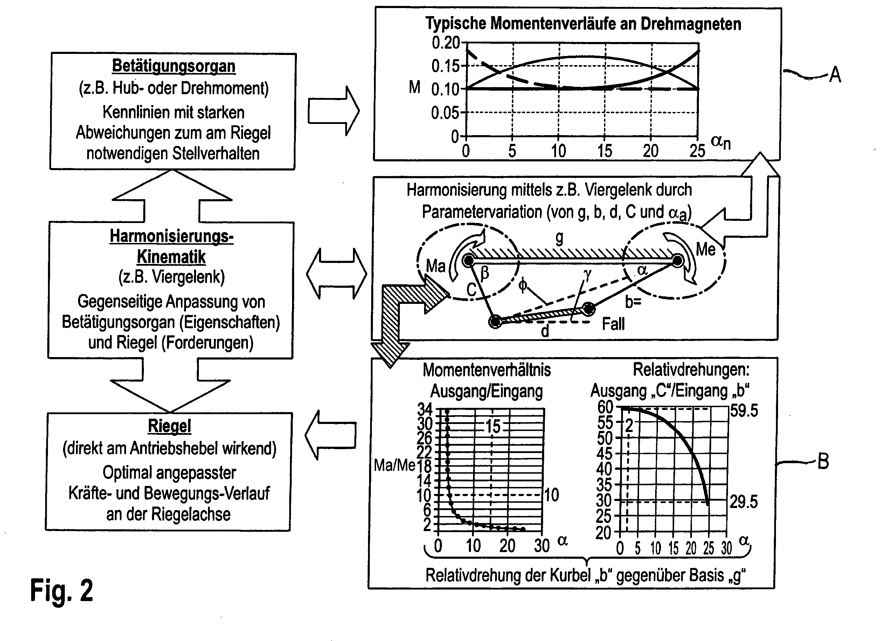

Fig. 2 zeigt in schematischer Weise die Funktion des erfindungsgemäßen Ver- und Entriegelungssystems. Durch die als Harmonisierungskinematik bezeichnete erfindungsgemäße Übertragungskinematik können beliebig vorgefundene ungeregelte Volllastkennlinien von Betätigungsorganen auf die seitens der Riegelelemente geforderten Last- und Kinematikvorgaben optimal abgestimmt werden.

In Fig. 2 sind in der Grafik A "Typische Momentenverläufe an Drehmagneten" beispielhafte Kennlinien des über den Drehwinkel αₙ aufgetragenen, vom Magneten abgegebenen Moments M für unterschiedliche Drehmagneten dargestellt. Die Grafik B in Fig. 2 zeigt die eingangs geschilderten Anforderungen an ein zuverlässiges Ver- und Entriegelungssystem. Diese Grafiken A und B der Fig. 2 verdeutlichen den Zielkonflikt im Falle einer bistabilen Betätigung der Riegelelemente, wie sie aus dem Stand der Technik bekannt ist.

Aus dem geforderten Momentenverhältnis Ma/Me aus dem Eingangs- oder Antriebsmoment Me und dem Ausgangs- oder Abtriebsmoment Ma gemäß Grafik B in Fig. 2 ist ersichtlich, dass die Kinematik eine Singularität 1. Art (keine Bewegungsübertragung, da der Winkel α im linken Teil der Kurve nahezu konstant ist) sowie eine Singularität 2. Art (keine Kraftübertragung, da das Momentenverhältnis Ma/Me im rechten Teil der Kurve nahezu konstant ist) zur Sicherung des verriegelten Zustandes aufweisen muss.

Die erfindungsgemäße Lösung der Aufgabenstellung erfolgt durch eine Kinematik, die in unterschiedlichsten Einbaulagen abtriebsseitig den erforderlichen Kräfte-Bewegungsverlauf aus den typischen Kennlinien der antriebsseitigen Betätigungsorgane erzeugt.

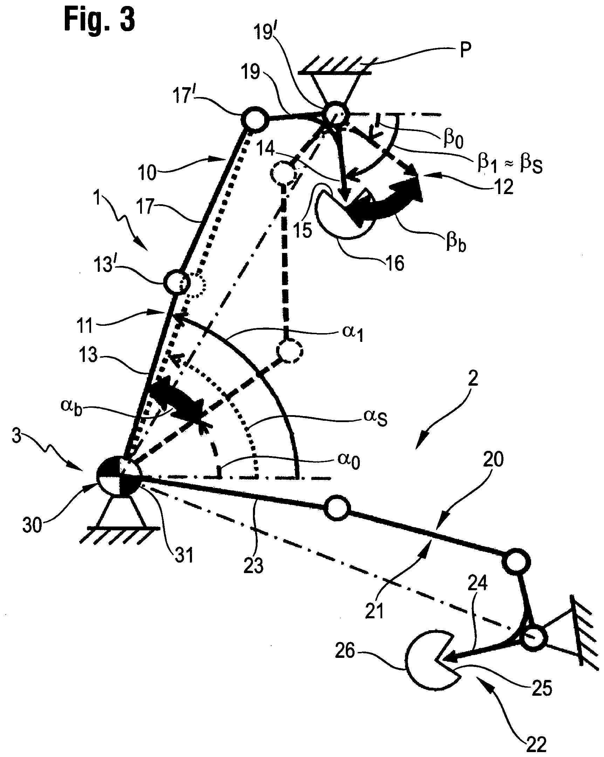

Erfindungsgemäß wird diese Funktion durch eine oder mehrere Kinematiken gemäß Fig. 3 realisiert, die in ihrem Bewegungsbereich mindestens einen Totpunkt (Singularität in der Strecklage) durchläuft, wobei diese Stellung kurz vor Erreichen der verriegelten Position liegt.

Fig. 3 zeigt zwei derartige Übertotpunkt-Kinematiken 1 und 2, die - um etwa 90° verdreht - gleichartig aufgebaut sind. Beide Kinematiken 1, 2 sowie gegebenenfalls noch weitere (nicht gezeigte) baugleiche Kinematiken sind mit einem einen Antrieb 3 bildenden Aktuator über ein Verbindungsglied 31 derart wirksam gekoppelt, dass der Aktuator die Kinematiken 1, 2 gleichzeitig, also synchron, betätigen kann. Der Antrieb 3 und die Kinematiken 1, 2 bilden das erfindungsgemäße Verriegelungs- und Entriegelungssystem.

Jede der Übertotpunkt-Kinematiken 1, 2 bildet eine Verriegelungs- und Entriegelungsanordnung 10, 20, die im gezeigten Beispiel jeweils ein Verriegelungs- und Entriegelungselement 12, 22 aufweist. Jedes Verriegelungs- und Entriegelungselement 12, 22 weist einen Riegel 14, 24 auf, der mit einer Riegelaufnahme 15, 25 eines Riegelaufnahmeelements 16, 26 in Eingriff bringbar ist. Der jeweilige Riegel 14, 24 weist dabei zum Beispiel einen konusförmigen Zapfen auf und die Riegelaufnahme 15, 25 ist dazu entsprechend als angepasste konusförmige Vertiefung ausgebildet.

Zwischen dem Antrieb 3 und dem jeweiligen Riegel 14, 24 ist eine Übertragungskinematik 11, 21 als Bestandteil der jeweiligen Verriegelungs- und Entriegelungsanordnung 10, 20 vorgesehen. Die Übertragungskinematiken 11, 21 sind jeweils mittels eines ersten Kinematikglieds 13, 23 mit dem Antrieb 3 gekoppelt. Da die Kinematiken 1, 2 und somit auch die Übertragungskinematiken 11 und 21 gleichartig aufgebaut sind, wird nachstehend nur die Übertragungskinematik 11 beschrieben.

Ein als Betätigungsorgan bezeichnetes erstes Kinematikglied 13 ist fest mit einem drehbar angetriebenen Element 30 (beispielsweise einer Welle) des ortsfesten, zum Beispiel gestellfesten, Antriebs 3 verbunden und kann von diesem entlang eines Winkels α bewegt werden. Zum Zwecke der Verriegelung wird das Betätigungsorgan vom Antrieb 3 (in Fig. 3) entgegen dem Uhrzeigersinn gedreht und zum Entriegeln entgegengesetzt dazu im Uhrzeigersinn. Dabei bezeichnet der Winkel α₀ den Winkelbereich ausgehend von einer gedachten Nullstellung bis zum Erreichen des entriegelten Zustands, der Winkel α_{S} den Winkelbereich von der gedachten Nullstellung bis zum Erreichen der Strecklage, und der Winkel α₁ den Winkelbereich ausgehend von der gedachten Nullstellung bis zu der gesichert verriegelten Übertotpunktlage. Der reale Bewegungsbereich des Antriebs zwischen der entriegelten (gestrichelt gezeichneten) entriegelten Endlage und der (durchgezogen gezeichneten) gesichert verriegelten Übertotpunktlage wird durch den Doppelpfeil α_{b} bezeichnet.

Entsprechend sind die Bewegungswinkel des Riegels 14 angegeben. Dabei bezeichnet der Winkel β₀ den Winkelbereich ausgehend von einer gedachten Nullstellung bis zum Erreichen des entriegelten Zustands und der Winkelbereich β₁ bezeichnet den Winkelbereich von der gedachten Nullstellung bis zum Erreichen der verriegelten Position, die der gesicherten Verriegelungsposition entspricht. Der Winkelbereich β₁ entspricht daher im Wesentlichen dem Winkelbereich β_{S} von der gedachten Nullstellung bis zu der gesichert verriegelten Position in der Übertotpunktlage. Der Riegel 14 wird also zum Erreichen der Übertotpunktlage aus der Strecklage nicht oder nahezu nicht weitergedreht.

Am vom Antrieb 3 abgewandten freien Ende des ersten Kinematikglieds 13 ist dieses mittels eines ersten Gelenks 13' mit einem ersten Ende eines zweiten Kinematikglieds 17 schwenkbar verbunden. Am anderen Ende des zweiten Kinematikglieds 17 ist mittels eines zweiten Gelenks 17' ein drittes Kinematikglied 19 schwenkbar mit dem zweiten Kinematikglied 17 verbunden. Das dritte Kinematikglied 19 ist mittels eines dritten Gelenks 19' an einem ortsfesten, beispielsweise gestellfesten, Punkt P gelenkig gelagert. Der Riegel 14 ist mit dem dritten Kinematikglied 19 starr verbunden. Auf diese Weise bilden das erste, zweite und dritte Kinematikglied 13, 17, 19 sowie das erste, zweite und dritte Gelenk 13', 17', 19' zusammen mit dem drehbar angetriebenen Element 30 des Antriebs 3 ein Viergelenkgetriebe.

In Fig. 3 sind drei unterschiedliche Positionen der Übertragungskinematik 11 gezeigt.

In der ersten, gestrichelt gezeichneten Position steht der Riegel 14 außer Eingriff mit der Riegelaufnahme 15 und das System ist entriegelt. Das das Betätigungsorgan bildende erste Kinematikglied 13 ist dazu vom Antrieb 3 um den den tatsächlichen Bewegungsbereich des Antriebs wiedergebenden Winkel α_{b} im Uhrzeigersinn verschwenkt worden, was in einem Verschwenken des mit dem Riegel 14 versehenen dritten Kinematikglieds 19 um einen Winkel β_{b} resultiert.

In der zweiten, gepunktet gezeichneten Position steht der Riegel 14 in Eingriff mit der Riegelaufnahme 15. Das erste Kinematikglied 13 und das zweite Kinematikglied 17 bilden eine Gerade, wie durch die gepunkteten Linien gut zu sehen ist, und nehmen so eine Strecklage ein. Zwar ist das System in dieser Position verriegelt, doch können das erste und das zweite Kinematikglied 13, 17 - beispielsweise durch Erschütterungen oder andere äußere Krafteinflüsse - unvermittelt wieder in die gestrichelt dargestellte entriegelte Position zurückschwenken. Diese Verriegelungsposition ist also nicht gesichert.

Die dritte, mit durchgezogen gezeichneten Linien gezeigte Position stellt eine Übertotpunktlage dar, in der das erste Kinematikglied 13 und das zweite Kinematikglied 17 über die Strecklage (Totpunktlage) hinaus entgegen dem Uhrzeigersinn geschwenkt worden sind. Da zur Überwindung der Strecklage eines der Kinematikglieder einer Veränderung, beispielsweise einer Verformung (zum Beispiel einer Biegeverformung oder einer axialen Kompressionsverformung des ersten und/oder zweiten Kinematikglieds 13, 17 oder einer Biegeverformung des dritten Kinematikglieds 19) unterworfen werden muss, kann der Übergang aus der verriegelten Übertotpunktlage zurück in die entriegelte Position nur durch Überwinden einer Kraft erfolgen, so dass die als Übertotpunktlage gezeigte Verriegelungsposition gegen ungewolltes Entriegeln gesichert ist.

Allein durch die begrenzten Steifigkeiten innerhalb der die Übertragungskinematik bildenden kinematischen Kette wird ein selbsttätiges kraftschlüssiges Halten der gesicherten verriegelten Position ermöglicht. Zum Halten der entriegelten Position genügt beispielsweise eine antriebsseitig integrierte Rückzugfeder. In diesem Falle genügt eine (ungeregelt) impulsweise Betätigung eines zweiseitig wirkenden Antriebes wodurch die Volllastcharakteristik des verwendeten Aktors nutzbar wird.

Durch Anordnung mehrerer Abgriffe am Antriebsglied, beispielsweise durch die als jeweilige Antriebskurbel ausgebildeten ersten Kinematikglieder 13, 23, lässt sich eine zwangläufige und exakt weg- und zeitsynchrone Ver- und Entriegelung mehrerer gebündelter, unabhängig arbeitender Antriebsstränge, nämlich der Übertragungskinematiken 11, 21, des ein Stellsystem bildenden Verriegelungs- und Entriegelungssystems verwirklichen.

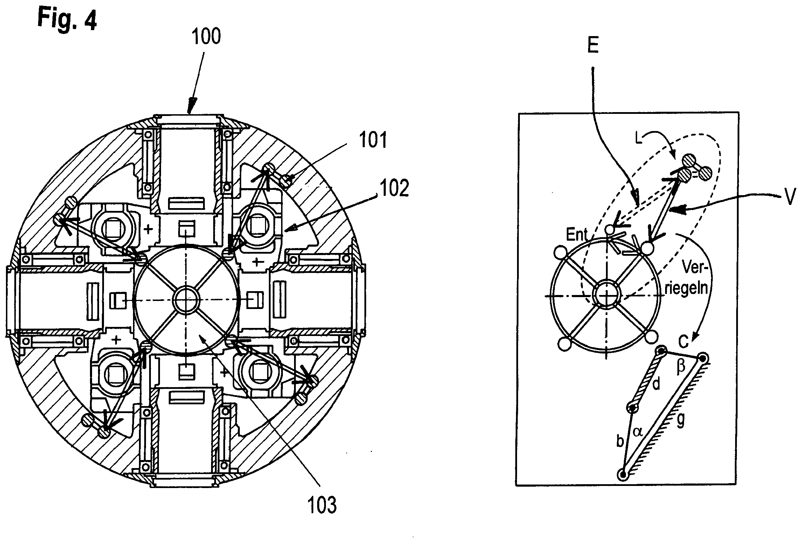

Fig. 4 zeigt eine praktische Anwendung des erfindungsgemäßen Ver- und Entriegelungssystems in einem Flugkörperstellsystem zur Ver-/Entriegelung der Wellen 100 von drehbar gelagerten aerodynamischen Steuerflächen. Gezeigt sind hier die Wellen 100 von vier im Winkel von 90° zueinander angeordneten (nicht gezeigten) Steuerflächen. Das Bezugszeichen 101 bezeichnet eine der vier synchron betätigbaren und nur schematisch dargestellten Übertragungskinematiken und das Bezugszeichen 102 bezeichnet einen Riegel, der mit der zugeordneten Welle 100 in einem verriegelten Eingriff steht. Das Bezugszeichen 103 bezeichnet einen ein Verbindungsglied für die vier Übertragungskinematiken bildenden zentralen Torquer, der von einem (nicht gezeigten) Antrieb drehbar betätigbar ist. In der in Fig. 4 dargestellten Position befindet sich die jeweilige Übertragungskinematik in der gesichert verriegelten Übertotpunktlage.

Das rechte Schaubild in Fig. 4 zeigt das erfindungsgemäße Lösungskonzept, wobei das Bezugszeichen L die Momentenübersetzung im Losbrechbereich bezeichnet und wobei das Bezugszeichen E die entriegelte Position und das Bezugszeichen V die verriegelte Übertotpunktlage bezeichnen.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

Es bezeichnen:
- 1: Kinematik
- 2: Kinematik
- 3: Antrieb
- 10: Verriegelungs- und Entriegelungsanordnung
- 11: Übertragungskinematik
- 12: Verriegelungs- und Entriegelungselement
- 13: erstes Kinematikglied
- 13': erstes Gelenk
- 14: Riegel
- 15: Riegelaufnahme
- 16: Riegelaufnahmeelement
- 17: zweites Kinematikglied
- 17': zweites Gelenk
- 19: drittes Kinematikglied
- 19': drittes Gelenk
- 20: Verriegelungs- und Entriegelungsanordnung
- 21: Übertragungskinematik
- 22: Verriegelungs- und Entriegelungselement
- 23: Kinematikglied
- 24: Riegel
- 25: Riegelaufnahme
- 26: Riegelaufnahmeelement
- 30: Element
- 31: Verbindungsglied
- 100: Welle
- 101: Übertragungskinematik
- 102: Riegel
- 103: Torquer
- E: entriegelte Position
- L: Momentenübersetzung
- V: verriegelte Übertotpunktlage

## Patentansprüche

1. Verriegelungs- und Entriegelungssystem mit reversibler Auslösbarkeit, mit einem ortsfesten Antrieb (3) und einer Mehrzahl von Verriegelungs- und Entriegelungsanordnungen (10, 20), die jeweils aufweisen:
- zumindest ein Verriegelungs- und Entriegelungselement (12, 22), das zwischen einer Verriegelungsposition (12, 22) und einer Entriegelungsposition bewegbar ist; und
- eine Übertragungskinematik (11, 21) zur kinematischen Kopplung des Verriegelungs- und Entriegelungselements (12, 22) an den Antrieb mit einem ersten Kinematikglied (13), einem zweiten Kinematikglied (17) und einem dritten Kinematikglied (19),
wobei das erste Kinematikglied (13) an den Antrieb gekoppelt und mit einem von dem Antrieb (3) abgewandten freien Ende mittels eines ersten Gelenks (13') mit einem ersten Ende des zweiten Kinematikglieds (17) schwenkbar verbunden ist,
wobei ein zweites Ende des zweiten Kinematikglieds (17) mittels eines zweiten Gelenks (17') schwenkbar mit dem dritten Kinematikglied (19) verbunden ist, und
wobei das dritte Kinematikglied (19) mittels eines dritten Gelenks (19') an einem ortsfesten Punkt (P) gelenkig gelagert und das Verriegelungs- und Entriegelungselement (12, 22) starr mit dem dritten Kinematikglied (19) verbunden ist,
wobei das erste Kinematikglied (13) mittels des Antriebs (3) zwischen einer ersten Position und einer zweiten Position verschwenkbar ist, wobei das erste Kinematikglied (13) in der zweiten Position über eine Strecklage, in welcher das erste und das zweite Kinematikglied (13, 17) eine Gerade bilden, hinaus in eine Übertotpunktlage verschwenkt ist, und
wobei zumindest eines der Kinematikglieder (13, 17, 19) in einer kinematisch wirksamen Richtung derart veränderbar ist, dass sich die Übertragungskinematik (11, 21) über die Strecklage hinaus in die Übertotpunktlage bewegen kann.

2. Verriegelungs- und Entriegelungssystem nach Anspruch 1,
**dadurch gekennzeichnet,**
**dass** die Verriegelungs- und Entriegelungsanordnungen (10, 20) der Mehrzahl von Verriegelungs- und Entriegelungsanordnungen (10, 20) über zumindest ein Verbindungsglied (31) miteinander gekoppelt sind und dadurch bei einer Bewegung des Verriegelungs- und Entriegelungselements (12, 22) aus der Verriegelungsposition in die Entriegelungsposition oder aus der Entriegelungsposition in die Verriegelungsposition zwangläufig synchronisiert sind.

3. Verriegelungs- und Entriegelungssystem nach Anspruch 1 oder 2,
**dadurch gekennzeichnet,**
**dass** das Verriegelungs- und Entriegelungselement (12, 22) in der zweiten Position des ersten Kinematikglieds (13) in der Verriegelungsposition und in der ersten Position des ersten Kinematikglieds (13) in der Entriegelungsposition angeordnet ist.

4. Verriegelungs- und Entriegelungssystem nach Anspruch 3,
**dadurch gekennzeichnet,**
**dass** die Übertragungskinematik (11, 21) so ausgebildet ist, dass sie auch in der ersten Position des ersten Kinematikglieds (13) eine Übertotpunktlage einnimmt.

5. Verriegelungs- und Entriegelungssystem nach einem der vorhergehenden Ansprüche,
**dadurch gekennzeichnet,**
**dass** die Veränderbarkeit von zumindest einem der Kinematikglieder (13, 17, 19) in einer kinematisch wirksamen Richtung dadurch erzielt wird, dass das Kinematikglied (13, 17, 19) in einer kinematisch wirksamen Abmessung definiert veränderbar ist.

6. Verriegelungs- und Entriegelungssystem nach Anspruch 5,
**dadurch gekennzeichnet,**
**dass** die definierte Veränderbarkeit der wirksamen kinematischen Abmessung durch eine vorgegebene Längssteifigkeit des Kinematikglieds (13, 17, 19) bewirkt wird.

7. Verriegelungs- und Entriegelungssystem nach Anspruch 6,
**dadurch gekennzeichnet,**
**dass** zumindest ein Anschlag für das veränderbare Kinematikglied (13, 17, 19) vorgesehen ist, der eine von der definierten Veränderbarkeit der kinematisch wirksamen Abmessung zugelassene Bewegung des veränderbaren Kinematikglieds (13, 17, 19) begrenzt.

8. Verriegelungs- und Entriegelungssystem nach einem der vorhergehenden Ansprüche,
**dadurch gekennzeichnet,**
**dass** das Verbindungsglied (31) ein drehbares oder schwenkbares Element ist.

9. Verriegelungs- und Entriegelungssystem nach Anspruch 8,
**dadurch gekennzeichnet,**
**dass** das Verbindungsglied (31) selbstzentrierend gelagert ist.

10. Verriegelungs- und Entriegelungssystem nach Anspruch 8 oder 9,
**dadurch gekennzeichnet,**
**dass** die ersten Kinematikglieder (13, 23) der Übertragungskinematik (11, 21) der einzelnen miteinander gekoppelten Verriegelungs- und Entriegelungsanordnungen (10, 20), vorzugsweise symmetrisch, am Verbindungsglied (31) angebracht sind.

11. Verriegelungs- und Entriegelungssystem nach einem der Ansprüche 7 bis 10,
**dadurch gekennzeichnet,**
**dass** die einzelnen miteinander gekoppelten Verriegelungs- und Entriegelungsanordnungen (10, 20) selbstsynchronisierend ausgebildet sind.

12. Verriegelungs- und Entriegelungssystem nach einem der vorhergehenden Ansprüche,
**dadurch gekennzeichnet,**
**dass** das jeweilige Verriegelungs- und Entriegelungselement (12, 22) als eine Zapfenverbindung mit einem konischen Zapfen und einer angepasst konischen Zapfenaufnahme ausgebildet ist.

## Claims

1. Locking and unlocking system with reversible triggering, comprising a stationary drive (3) and a plurality of locking and unlocking arrangements (10, 20), which each have:
- at least one locking and unlocking element (12, 22), which is movable between a locking position (12, 22) and an unlocking position; and
- a transmission kinematic system (11, 21) for kinematically coupling the locking and unlocking element (12, 22) to the drive, comprising a first kinematic member (13), a second kinematic member (17) and a third kinematic member (19),
wherein the first kinematic member (13) is coupled to the drive and pivotably connected, by a free end remote from the drive (3), to a first end of the second kinematic member (17) via an articulation (13'),
wherein a second end of the second kinematic member (17) is pivotably connected to the third kinematic member (19) via a second articulation (17'), and
wherein the third kinematic member (19) is mounted in an articulated manner on a stationary point (P) via a third articulation (19') and the locking and unlocking element (12, 22) is rigidly connected to the third kinematic member (19),
wherein the first kinematic member (13) is pivotable by means of the drive (3) between a first position and a second position, the first kinematic member (13), in the second position, being pivoted past an extended position, in which the first and the second kinematic member (13, 17) form a straight line, into a top dead centre position, and wherein at least one of the kinematic members (13, 17, 19) is alterable in a kinematically effective direction in such a way that the transmission kinematic system (11, 21) can move past the extended position into the top dead centre position.

2. Locking and unlocking system according to claim 1,
**characterised**
**in that** the locking and unlocking arrangements (10, 20) of the plurality of locking and unlocking arrangements (10, 20) are coupled to one another via at least one connecting member (31), and as a result are compulsorily synchronised during a movement of the locking and unlocking element (12, 22) from the locking position into the unlocking position or from the unlocking position into the locking position.

3. Locking and unlocking system according to claim 1 or 2,
**characterised**
**in that** the locking and unlocking element (12, 22) is arranged in the locking position in the second position of the first kinematic member (13) and in the unlocking position in the first position of the first kinematic member (13) .

4. Locking and unlocking system according to claim 3,
**characterised**
**in that** the transmission kinematic system (11, 21) is formed in such a way that it also takes on a top dead centre position in the first position of the first kinematic member (13) .

5. Locking and unlocking system according to any of the preceding claims,
**characterised**
**in that** the alterability of at least one of the kinematic members (13, 17, 19) in a kinematically effective direction is achieved in that the kinematic member (13, 17, 19) is alterable in a defined manner in terms of a kinematically effective measurement.

6. Locking and unlocking system according to claim 5,
**characterised**
**in that** the defined alterability of the effective kinematic measurement is brought about by way of a predetermined longitudinal stiffness of the kinematic member (13, 17, 19).

7. Locking and unlocking system according to claim 6,
**characterised**
**in that** at least one stop for the alterable kinematic member (13, 17, 19) is provided, and delimits a movement of the alterable kinematic member (13, 17, 19) which is permitted by the defined alterability of the kinematically effective measurement.

8. Locking and unlocking system according to any of the preceding claims,
**characterised**
**in that** the connecting member (31) is a rotatable or pivotable element.

9. Locking and unlocking system according to claim 8,
**characterised**
**in that** the connecting member (31) is mounted in a self-centring manner.

10. Locking and unlocking system according to either claim 8 or claim 9,
**characterised**
**in that** the first kinematic members (13, 23) of the transmission kinematic system (11, 21) of the individual locking and unlocking arrangements (10, 20) which are coupled to one another are attached, preferably symmetrically, to the connecting member (31).

11. Locking and unlocking system according to any of claims 7 to 10,
**characterised**
**in that** the individual locking and unlocking arrangements (10, 20) which are coupled to one another are formed to be self-synchronising.

12. Locking and unlocking system according to any of the preceding claims,
**characterised**
**in that** each locking and unlocking element (12, 22) is formed as a journal connection comprising a conical journal and a matchingly conical journal receptacle.

## Revendications

1. Système de verrouillage et déverrouillage à déclenchement réversible, comportant un entraînement stationnaire (3) et une pluralité de dispositifs de verrouillage et déverrouillage (10, 20), qui comprennent respectivement :
- au moins un élément de verrouillage et déverrouillage (12, 22), lequel est mobile entre une position de verrouillage (12, 22) et une position de déverrouillage ; et
- une cinématique de transmission (11, 21) pour l'accouplement cinématique de l'élément de verrouillage et déverrouillage (12, 22) à l'entraînement, comportant un premier maillon cinématique (13), un deuxième maillon cinématique (17) et un troisième maillon cinématique (19),
dans lequel le premier maillon cinématique (13) est couplé à l'entraînement et est relié de manière pivotante, avec une première extrémité libre se détournant de l'entraînement (3), à une première extrémité du deuxième maillon cinématique (17) au moyen d'une première articulation (13'), dans lequel une deuxième extrémité du deuxième maillon cinématique (17) est reliée de manière pivotante au troisième maillon cinématique (19) au moyen d'une deuxième articulation (17'),
dans lequel le troisième maillon cinématique (19) est disposé de manière pivotante à un point fixe au moyen d'une troisième articulation (19') et l'élément de verrouillage et déverrouillage (12, 22) est relié de manière rigide au troisième maillon cinématique (19),
dans lequel le premier maillon cinématique (13) peut pivoter entre une première position et une deuxième position au moyen de l'entraînement (3), dans lequel le premier maillon cinématique (13) dans la deuxième position est pivoté dans un état de passage brusque par le biais d'un état étendu, où le premier et le deuxième maillon cinématique (13, 17) forment une droite, et
dans lequel au moins un des maillons cinématiques (13, 17, 19) est variable dans une direction cinématiquement opérante de telle sorte que la cinématique de transmission (11, 21) peut être mue dans l'état de passage brusque par le biais de l'état étendu.

2. Système de verrouillage et déverrouillage selon la revendication 1,
**caractérisé en ce**
**que** les dispositifs de verrouillage et déverrouillage (10, 20) de la pluralité de dispositifs de verrouillage et déverrouillage (10, 20) sont couplés l'un à l'autre par le biais d'au moins un maillon de raccordement (31) et ainsi nécessairement synchronisés lors d'un mouvement de l'élément de verrouillage et déverrouillage (12, 22) depuis la position de verrouillage vers la position de déverrouillage ou depuis la position de déverrouillage vers la position de verrouillage.

3. Système de verrouillage et déverrouillage selon la revendication 1 ou 2,
**caractérisé en ce**
**que** l'élément de verrouillage et déverrouillage (12, 22) est agencé dans la position de verrouillage dans la deuxième position du premier maillon cinématique (13) et est agencé dans la position de déverrouillage dans la première position du premier maillon cinématique (13).

4. Système de verrouillage et déverrouillage selon la revendication 3,
**caractérisé en ce**
**que** la cinématique de transmission (11, 21) est réalisée de façon à occuper un état de passage brusque également dans la première position du premier maillon cinématique (13).

5. Système de verrouillage et déverrouillage selon l'une des revendications précédentes,
**caractérisé en ce**
**que** la variabilité d'au moins un des maillons cinématiques (13, 17, 19) dans une direction cinématiquement opérante est obtenue **en ce que** le maillon cinématique (13, 17, 19) est variable de manière définie dans une dimension cinématiquement opérante.

6. Système de verrouillage et déverrouillage selon la revendication 5,
**caractérisé en ce**
**que** la variabilité définie de la dimension cinématiquement opérante est opérée par le biais d'une flexibilité longitudinale prédéfinie du maillon cinématique (13, 17, 19) .

7. Système de verrouillage et déverrouillage selon la revendication 6,
**caractérisé en ce**
**qu'**au moins une butée est prévue pour le maillon cinématique variable (13, 17, 19), laquelle délimite un mouvement du maillon cinématique variable (13, 17, 19) permis par la variabilité définie de la dimension cinématiquement opérante.

8. Système de verrouillage et déverrouillage selon l'une des revendications précédentes,
**caractérisé en ce**
**que** le maillon de raccordement (31) est un élément rotatif ou pivotant.

9. Système de verrouillage et déverrouillage selon la revendication 8,
**caractérisé en ce**
**que** le maillon de raccordement (31) est disposé de manière à s'autocentrer.

10. Système de verrouillage et déverrouillage selon la revendication 8 ou 9,
**caractérisé en ce**
**que** les premiers maillons cinématiques (13, 23) de la cinématique de transmission (11, 21) des dispositifs de verrouillage et déverrouillage (10, 20) couplés individuellement l'un à l'autre sont arrangés au maillon cinématique (31), de préférence de manière symétrique.

11. Système de verrouillage et déverrouillage selon l'une des revendications 7 à 10,
**caractérisé en ce**
**que** les dispositifs de verrouillage et déverrouillage (10, 20) couplés individuellement l'un à l'autre sont réalisés de manière autosynchronisante.

12. Système de verrouillage et déverrouillage selon l'une des revendications précédentes,
**caractérisé en ce**
**que** l'élément de verrouillage et déverrouillage (12, 22) respectif est réalisé comme un raccordement tenon-mortaise avec un tenon conique et une mortaise conique adaptée.
